# EUROPEAN PATENT SPECIFICATION

(11) **EP 1 139 723 B1**
(45) Date of publication and mention of the grant of the patent: **21.05.2003**
(21) Application number: 99962567.6
(22) Date of filing: 15.12.1999
(51) Int. Cl.: A01J 9/00, B65D 81/24

(54) **DEVICE AND METHOD FOR MILKING ANIMALS**
VORRICHTUNG UND VERFAHREN ZUM MELKEN VON TIEREN
DISPOSITIF ET PROCEDE DE TRAITE POUR ANIMAUX

(30) Priority: 16.12.1998 NL 1010827; 16.12.1998 NL 1010828
(43) Date of publication of application: 10.10.2001
(60) Divisional application: 02024629.4
(73) Proprietor: Prolion B.V., 2140 AA Vijfhuizen (NL)
(72) Inventor: OOSTERLING, Pieter, Adriaan, NL-2151 CP Nieuw-Vennep (NL); DESSING, Jacobus, Petrus, Maria, 2134 EM Hoofddorp (NL)
(74) Representative: Uittenbogaart, Gustaaf Adolf
(86) International application number: NL9900775
(87) International publication number: WO00035271

(56) References cited:
- CH-A- 429 566
- FR-A- 1 081 523
- US-A- 2 905 560

## Description

The invention relates to a device according to the preamble of Claim 1. A device of this nature is known. The drawback of the known device is that with a fluctuating volume of milk in the milk tank, the milk is also at different levels. There is often some degree of foam just above the surface of the milk, and this foam containing milk will come into contact with the wall, where it will dry and, as it were, form a cake on the wall of the milk tank. It is extremely difficult to clean the milk tanks and, in particular, to remove such dried-on milk, and there is a risk of bacteria beginning to grow in this dried-on milk. This has an adverse effect on the quality of the milk stored in the milk tank.

The invention aims to overcome this drawback and, for this purpose is designed as described in the characterizing part of Claim 1. By keeping the storage volume of the storage tank exactly the same size as all the milk stored therein at all times, it is thus possible to ensure that there is no wall to which the milk can adhere, and consequently this milk is also unable to dry on.
According to one embodiment, the device is designed as described in Claim 2. As a result, it is unnecessary to cool the milk in the milk tank, and it is sufficient for the milk to be kept at the storage temperature. In this case, no agitating means for circulating milk which is to be cooled and/or heat exchangers are required in the milking stall, so that the milk tank can be of simple design.

According to one embodiment, the device is designed as described in Claim 3. This ensures, in a simple manner, that the milk stored in the milk tank maintains its storage temperature.

According to a further refinement, the device is designed as described in Claim 4. This results, in a simple manner, in a milk tank whose volume adjusts itself to the quantity of milk stored in the milk tank.

According to a further refinement, the device is designed as described in Claim 5. As a result, there are no dead corners where milk can accumulate on the wall and where bacterial growth may occur.

According to one embodiment, the device is designed as described in Claim 6. This makes the milk tank easy to construct.

According to a further refinement, the device is designed as described in Claim 7. In this way, the milk tank remains compact despite the flexible walls.

According to another embodiment of the device, the latter is designed as described in Claim 8. This results in a simple milk tank in which a large quantity of milk with a fluctuating volume can be stored.

According to a further refinement of the device, the latter is designed as described in Claim 9. This makes it possible, in a simple manner, to clean walls which are contaminated with milk while the milk tank is being filled or emptied.

According to a further refinement, the device is designed as described in Claim 10. In this way, the milk is easy to cool or keep at a low temperature.

According to a further refinement, the device is designed as described in Claim 11. In this arrangement, it is easier to clean milk off the walls used, since it is difficult for milk to cake onto glass.

According to a further refinement, the device is designed as described in Claim 12. This makes it easy to transport the milk tank.

According to a further refinement, the device is designed as described in Claim 13. This makes it easy to clean the interior of the milk tank.

According to one embodiment, the device is designed as described in Claim 14. In this way, it is possible for various milk tanks to be filled in succession, for example by switching the supply from a full milk tank to the next, as yet unfilled milk tank.

According to a further refinement, the device is designed as described in Claim 15. In this way, the milk tanks can be automatically filled in succession.

According to one embodiment, the device is designed as described in Claim 16. In this way, the various milk tanks can be used for milk of different quality.

According to a refinement, the device is designed as described in Claim 17. In this way, it is possible for milk of a desired quality as produced by one animal to be stored in a stipulated milk tank.

According to a refinement, the device is designed as described in Claim 18. In this way, the milk can be stored in the correct milk tank on the basis of previously measured properties of the animal to be milked.

According to a refinement, the device is designed as described in Claim 19. In this way, milk is stored in the designated milk tank on the basis of directly measured properties which may vary during milking, such as for example the fat content.

According to one embodiment, the device is designed as described in Claim 20. In this way, it is always possible to separate the milk into the correct milk tank while the animals to be milked are being milked in different milking stalls, so that the milking stalls can be used optimally and there are no extra waiting times for animals with special milk.

The invention also comprises a method according to Claim 21. Using this method, the milk is transported to the milk factory, for example, under hygienic conditions and without having to be pumped from one vessel to another.

The invention also comprises a method according to Claim 22. This method ensures that, after emptying, the storage volume of the milk tank can be minimized in a simple manner.

The invention is explained below on the basis of a number of exemplary embodiments and with the aid of a drawing, in which:
Figure 1 diagrammatically depicts a milking device,
Figure 2 shows part of a cross section through a first embodiment of a milk tank as used in Figure 1,
Figure 3 shows the circulation of cooling medium in the bottom wall or top wall of the milk tank shown in Figure 2,
Figure 4 shows a cross section through a second embodiment of a milk tank as used in Figure 1,
Figure 5 shows a plan view of the milk tank from Figure 4,
Figure 6 diagrammatically depicts a milking device for cows provided with a number of milk tanks, and
Figure 7 shows an amended design of the milking device for cows shown in Figure 6.

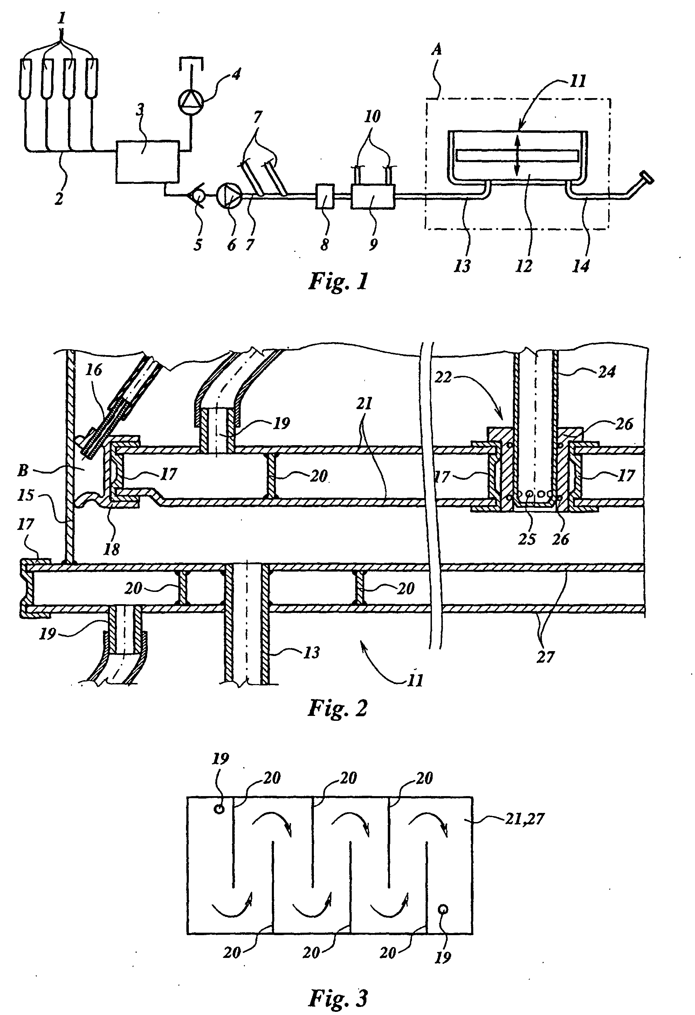

Figure 1 shows a milking device with milking cups 1 which are connected to an air separator 3 by means of a milking line 2. As is known, the milking cups 1 in a milking stall are connected to an udder of an animal which is to be milked, such as for example a cow. Then, in a known way, a pulsating movement is generated in the milking cups 1, for example by means of a vacuum, after which milk flows into the milking cups and, via the milking line 2, to the air separator 3. The air separator 3 is connected to a vacuum pump 4, with the result that a subatmospheric pressure prevails in the air separator 3 during milking, so that the milk is sucked towards the air separator 3. A milk quantity meter may be positioned in the milking line 2 downstream of the air separator 3, or alternatively the air separator 3 may also be designed as a milk quantity meter.

After milking is complete, the milk is pumped to a milk tank 11 by a pump 6. A non-return valve 5 is positioned between the pump 6 and the air separator 3, so that when the air separator 3 is under vacuum during milking there is no milk sucked out of the milk tank 11. If appropriate, the vacuum is switched off in a known way at the moment at which pump 6 is switched on.

A filter 8 and a heat exchanger 9 are incorporated in a milk pressure line 7 between the pump 6 and the milk tank 11. The contaminants which may have entered the milk during milking are filtered out of the milk in the filter 8. In the heat exchanger 9, the milk which is being pumped to the milk tank 11 is cooled to the storage temperature of approximately 0° to 4°, and preferably 1° Celsius. For this purpose, the heat exchanger 9 is provided with cooling-medium ports 10 which are in communication with a cooling unit (not shown). Preferably, the heat exchanger 9 is a direct precooler, in which case the cooling medium, such as freon or a similar substance, is vapourized directly in the cooler and withdraws heat from the pipes through which the milk is flowing. In this case, the heat exchanger 9 is provided with a regulator, so that the milk flowing out of the heat exchanger 9 is at a more or less constant temperature. This ensures that the milk in the milk tank 11 is immediately at the correct storage temperature, which is of benefit to the quality of the milk. There may also be other milk pressure lines 7 which pump milk to the milk tank 11, for example if the milking device comprises a plurality of milking stalls with milking cups 1.

The milk tank 11 is positioned in a cooling chamber A and, via a milk inlet 13, is connected to the heat exchanger 9. The milk tank 11 has a variable storage volume 12 which is diagrammatically depicted in the drawing. The variable storage volume 12 is provided with a milk discharge 14, to which a milk tanker can be coupled. The milk tanker can pump milk out of the milk tank 11 in order for it to be transported to the milk factory.

In the diagram shown, only components which are required for conveying the milk are shown. Naturally, other known features are also present, such as a cleaning system for the milking lines, a cleaning system for the milking cups and vacuum lines and ports for producing the pulsating movement in the milking line. The various stopcocks and valves are also not shown.

In the embodiment shown, one milk tank 11 is shown, in which all the milk which is extracted from the animals using the milking cups 1 is stored. However, it is also possible, in a manner described below, to use a plurality of milk tanks 11 which are then, for example, filled in succession or are filled with different grades or types of milk.

Figure 2 shows a milk tank 11 which is made with flat walls. A bottom wall 27 is of double-walled design. Side walls 15, which are of single walleddesign, are positioned on the bottom wall 27. A top wall 21, which can move in the vertical direction, is arranged inside the side walls 15. The movable top wall 21 is also double-walled. A sealing profile 18, which is attached to the movable top wall 21, is arranged between the movable top wall 21 and the stationary side walls 15. Together with the side wall 15, the sealing profile 18 forms a rinsing chamber B. The rinsing chamber B is provided with rinsing-water ports 16, by means of which, at the location of the rinsing chamber B, that part of the side wall 15 which moves past the sealing profile 18 can be cleaned. The temperature of the water flowing through the rinsing chamber B is preferably no higher than that of the milk. If appropriate, chemicals, such as solvents, are added to the water in order to clean the wall.

The variable storage volume 12 of the milk tank 11 is formed by the vertically directed movement of the top wall 21. The top wall 21 can move downwards to the bottom wall 27, so that the variable storage volume 12 is virtually nothing. Then, the milk can be pumped into the variable storage volume 12 via the milk inlet 13, after which the top wall 21 will move vertically upwards, the top wall 21 floating, as it were, on the milk, so that there is no air, or scarcely any air, between the top wall 21 and the milk. This prevents the milk from drying onto the side walls 15, and the milk remains free of oxygen, thus improving its shelf life. The side wall 15 is provided with a sensor (not shown), which can be used to detect whether the top wall 21 has reached its uppermost position. When the uppermost position is reached, a signal is emitted, for example to a control unit, with the result that the milk supply is switched over to a following milk tank 11.

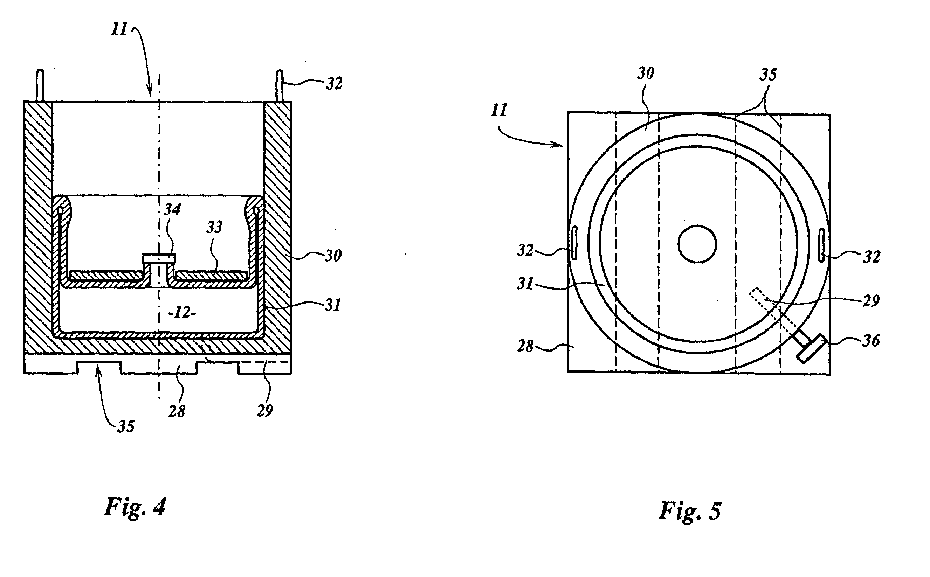

In order for the milk to be cooled or stored in a cooled state, the top wall 21 and the bottom wall 27 are of double-walled design and are made, for example, from two parallel glass plates. Baffles 20 are positioned between the glass plates, which baffles partly provide reinforcement and, at the same time, ensure that cooling liquid flows between the two glass plates, in the manner illustrated in Figure 3. For this purpose, the space between the glass plates is provided with cooling-water ports 19. The glass plates are provided all the way around with a fastening strip 17 which, if appropriate, is glued to the glass plates. The material of the bottom wall 27, the top wall 21 and the side walls 15 is preferably glass, since this is easy to clean owing to the fact that milk cannot adhere firmly to it.

In order for the interior of the empty milk tank 11 to be cleaned, the top wall 21 is provided with one or more openings 22. A guide sleeve 23, provided with O-rings 26, is secured in the opening 22. A sprayer 24 provided with spray holes 25 can be pushed vertically into the guide sleeve 23. During normal use, the bottom side of the sprayer 24 is level with the bottom side of the top wall 21, while during cleaning the top wall 21 is moved upwards, for example by blowing air into the storage chamber 12, and the sprayer 24 is pushed slightly into the tank, so that the surface of the top wall 21, the side walls 15 and the bottom wall 27 can be cleaned. By moving the sprayer 24 in the vertical direction during cleaning, it is possible to clean the entire side wall 15. If appropriate, the opening 22 may be of larger design, so that other cleaning features can also be introduced into the tank.

Figure 4 shows a second embodiment of the milk tank 11. In this case, the milk tank 11 comprises a flexible wall 31 which is positioned in a supporting wall 30. On the underside, the variable storage volume 12 is provided with a port 29. On the top side, there is an opening 22 in which a plug 34 can be placed. On the top side, there is also a plate 33 which holds the flexible wall 31 pressed against the supporting wall 30. The flexible wall 31 is made from fabric-reinforced plastic and is round, so that the inner surface does not have any dead corners and is easy to clean. As can also be seen from Fig. 5, the holder 30 is positioned on a support plate 28 which is provided with passages 35. The supporting wall 30 is also provided with lifting hooks 32. A quick-fit coupling 36 is arranged at the port 29. A sensor (not shown) is arranged on the holder 30, which sensor can detect whether the flexible wall has reached its uppermost position, so that the milk supply is switched over to another milk tank 11.

In addition to the embodiment shown in which there is a continuous flexible wall 31, it is also possible to use embodiments with, for example, a rigid bottom and top wall and a partially rigid side wall, in which case, for example, a roller diaphragm is arranged between the top wall and the side wall, so that the top wall can move in the vertical direction. It is then not necessary to use a supporting wall 30.

Use of the milk tank 11 shown in Figures 4 + 5 is as follows. The milk tank 11 is in the cooling chamber A, and the port 29 which corresponds to the milk inlet 13 and milk discharge 14, as shown in Figure 1, is connected to the heat exchanger 9 via a quick-fit coupling 36. The cooled milk is pumped into the variable storage volume 12, as a result of which the top side of the flexible wall 31 moves upwards and the variable storage volume 12 increases by the volume of the supplied milk. The milk is preferably cooled to approximately 1 degree celsius before being stored in the milk tank 11. Placing the milk tank 11 in a cooled chamber means that no additional cooling features are needed.

The milk is periodically collected to be taken to the milk factory. The quick-fit coupling 36 is then released and a fork-lift truck moves its fork into the passages 35 or a lifting device is attached to the lifting hooks 32. The milk tank 11 is then placed on a lorry and taken to the milk factory.

In the milk factory, the milk tank 11 is emptied via the port 29. If appropriate, the plug 34 is removed from the top wall in the process. After the milk tank has been emptied, the inside of the tank is cleaned, for example by inserting cleaning means through the opening 22. Carrying out cleaning in the milk factory allows all aspects of the cleaning to be carefully monitored and recorded. Since the milk tank 11 in the milk factory is detached from any installation, it is even possible to use high temperatures. After cleaning, the plug 34 is replaced in the opening 22, and subatmospheric pressure or vacuum is applied to the port 29 in the milk factory or in the milking device, with the result that the storage volume becomes virtually nothing. The milk tank 11 is then once again ready to be placed in the cooling chamber A of the milking device and/or to be used. In this way, it is ensured that the milk is stored in a tank which has been cleaned under controlled conditions.

In another embodiment, the milk tank 11, after it has been emptied, is destroyed in the milk factory until it forms small shreds which are recycled. In this case, the farm always uses new milk tanks 11, thus ensuring hygienic conditions.

In addition to the embodiment shown, in which the milk tank 11 is positioned in a cooling chamber A, it is also possible for the holder 30 to be provided with a cooling system and for cooling also to be arranged in the plate 33.

The cooling chamber A may also hold a plurality of milk tanks, in which place the full or partially filled milk tanks 11 can be exchanged for empty milk tanks 11. This allows the milk which has been extracted and stored hitherto to be continuously taken to the milk factory by a lorry. In this case, the cooling chamber A contains features allowing the milk tanks 11 to be filled successively as far as possible. Preferably, the features are arranged in such a way that there is always an empty milk tank 11 on standby for each milk tank 11 which is being filled. On the milk tank 11, there is a sensor which emits a signal when the milk tank 11 in question is full, so that the milk supply can be switched over to the milk tank 11 which is on standby. In the situation in which the milk extracted from the animals is divided according to quality and/or type in a manner to be described below, separate milk tanks for each quality or type are accommodated in the cooling chamber A.

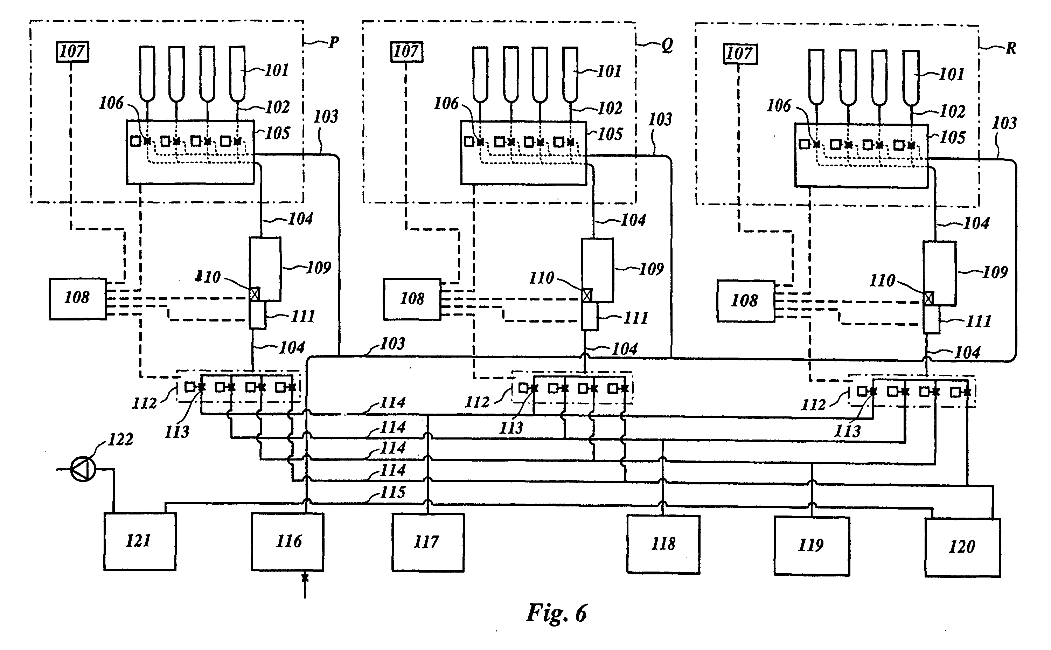

The milking device shown in Figure 6 comprises a first milking stall P, a second milking stall Q and a third milking stall R. Each milking stall is designed, in a known way, to milk cows and is of identical design. A cow can enter, for example, the first milking stall P in a known manner as discussed above and can then be milked by connecting milking cups 101 to the teats of the udder. This connection of the milking cups 101 can be carried out manually in a known manner. It is also possible for the milking cups 101 to be automatically connected to the teats, for which purpose an automatically controlled milking robot can be used.

The milking cups 101 are each connected, by means of a milking hose 102 via a change-over valve 106, to either a discharge line 103 or a milking line 104. The change-over valves 106 are combined in a first valve block 105 and are actuated by means of a control system 108. In each milking stall, there is an identification system 107, with which the identity of the animal present can be established in a known way, for example by recognition of a transponder which the animal is wearing. The discharge line 103 is connected to a discharge vessel 116 which, by means of a vacuum line 115, is connected to a vacuum vessel 121. The vacuum vessel 121 is kept at subatmospheric pressure in a known manner by a vacuum pump 122. The outlet vessel 116 is provided with a discharge with which it can be emptied.

The milking line 104 connects the milking cups 101 to a second valve block 112 in which shut-off valves 113 are accommodated. The shut-off valves 113 are actuated by the control unit 108. Each shut-off valve 113 is in communication, via a line 114, with a first storage tank 117, a second storage tank 118, a third storage tank 119 or a fourth storage tank 120. Each storage tank is provided with ports (not shown) for periodically emptying the storage tank.

A milk quantity meter 109 is incorporated in the milking line 104. The milk quantity meter 109 has a quantity sensor 111 which can be used to measure how much milk has been extracted from a cow. The milk quantity meter also incorporates a sensor 110 which, if appropriate, is positioned directly in the milk flow, or alternatively is positioned in a buffer chamber in which the extracted milk remains for a short time during milking. The sensor 110 and the quantity sensor 111 are connected to the control unit 108.

If appropriate, the milk quantity meters 109 are connected, via a line (not shown), to a second vacuum vessel in which a lower subatmospheric pressure prevails than in the vacuum vessel 121. Consequently, it is possible to convey the milk out of the milk quantity meter 109 to each of the storage tanks 117-120, while the subatmospheric pressure in the milking cups 101 is determined primarily by the subatmospheric pressure in the milk quantity meter 109. Using the second vacuum vessel makes the subatmospheric pressure in the milking cups 101 more stable and ensures that it is not affected by transport through the line 114.

The sensor 110 may be a single sensor for measuring specific properties of the milk or may be a sensor which is designed to measure the concentrations in the milk of certain types of substances or certain molecules. The concentration measured by the sensor 110 may be the fat content of the milk, if appropriate also the protein content or, if appropriate, the concentration of a specific substance or a specific protein in the milk. If appropriate, the sensor 110 is designed, for example, as a biosensor, which can be used to determine the concentration of a specific molecule, for example the concentration of lactoferrin.

The control unit 108 is shown separately, in diagrammatic form, for each milking stall, but preferably this control unit is common to the entire milking installation. The data concerning the cows to be milked, including the possible presence or concentration of a specific substance in the milk, is stored in the control unit 108. In this case, it is possible to indicate how it is expected that this concentration will vary during milking or, if appropriate, during lactation, so that the control unit can determine at what moment during milking or after what quantity of milk extracted the milk needs to be stored in a specific storage tank.

The device operates as follows: an animal which is to be milked enters a milking stall, for example the first milking stall P, where it is identified by the identification system 107. The milking cups 101 are connected to the teats of the udder. The change-over valves 106 are set in such a manner that the milking hose 102 is connected to the discharge vessel 116. After milking has started, so that a pulsating movement is exerted on the teats in the milking cups 101 in a known way, the first jets of milk flow out of a teat to the discharge vessel 116 under the influence of the subatmospheric pressure prevailing in the discharge vessel 116. This first milk usually contains contaminants, such as dried milk and bacteria, and is therefore discharged separately. If appropriate, water is metered into the milking cup 101, by means of which water this contaminated first milk is rinsed out of the milking hose 102. After a short time, 10-20 seconds, the change-over valves 106 are switched over, with the result that the milking cups 101 are brought into communication with the milking line 104.

At least one of the shut-off valves 113 in the second valve block 112 is always open, so that the milking line 104 is in communication with the subatmospheric pressure in one of the storage tanks 117, 118, 119 or 120. The extracted milk will flow out of the milking cup 101 towards one of the storage tanks as a result of this subatmospheric pressure.

In the first storage tank 117, for example, calf milk is stored, i.e. milk containing certain substances which are particularly suitable for calves, such as, inter alia, an extra high fat content, as given by cows which have recently calved. In the second storage tank 118, full-cream milk is stored, i.e. milk in which the fat content is higher than normal for other reasons. In most cows, the milk which is extracted at the end of milking has a higher fat content. It may be advantageous for the milk factory to supply milk with a higher fat content separately.

In the third storage tank 119, for example, the milk with a high cell count is stored. This is milk from animals which, for example, have a mastitis infection, with the result that there are high levels of bacteria in the milk. It is also possible to opt to store milk which contains traces of penicillin in the third storage tank 119.

The best milk is stored in the fourth storage receptacle 120. This milk is then not mixed with milk from infected cows and consequently has an improved shelf life or can be more successfully processed in the milk factory. Therefore, an improvement in quality is achieved by storing the milk separately.

The decision as to which of the storage tanks the milk is to be stored in is taken in the control unit 108. In the exemplary embodiment described above, it is possible to select the first storage tank 117 and the third storage tank 119 on the basis of the identity of the animal to be milked, if appropriate in combination with a measurement by the sensor 110, with which, for example, the conductivity of the milk is measured.

The decision to store the milk in the second storage tank 118 may be based on the duration of milking, the duration of milking combined with the identity of the cow or, for example, on a measurement carried out by the sensor 110. It is also possible to make use of the measurement carried out by the quantity sensor 111 to establish how much milking is required to reach an expected concentration of specific substances.

In addition to the examples described above, the device described can also be used to store special milk separately. By means of genetic engineering, it is possible to rear cows and other mammals which give milk in which a specific molecule, for example a protein or a fat, is present or, if appropriate, is present to an increased extent. The identity of these animals is known, and the control unit is aware of which storage tank this milk is to be stored in; if appropriate additional storage tanks for this purpose are coupled to the milking line 104 by means of a valve 113.

In addition to the above-described possibilities of establishing which storage tank the milk is to be stored in, various combinations are also possible.

In the example shown here, the various milking stalls P, Q and R make use of the same storage tanks. If appropriate, different storage tanks may be used.

Since, when using the various storage tanks, the same vacuum system is used, which is connected by means of lines 115 with low resistance to the storage tanks, it is possible to ensure that the same subatmospheric pressure prevails in the various storage tanks, so that there is no change in the subatmospheric pressure in the milking cup 101 when switching between the shut-off valves 113. In this case, the control unit 108 for the shut-off valves is designed in such a manner that there is always at least one valve 113 open during milking, so that there is always a subatmospheric pressure prevailing in the milking cup 1.

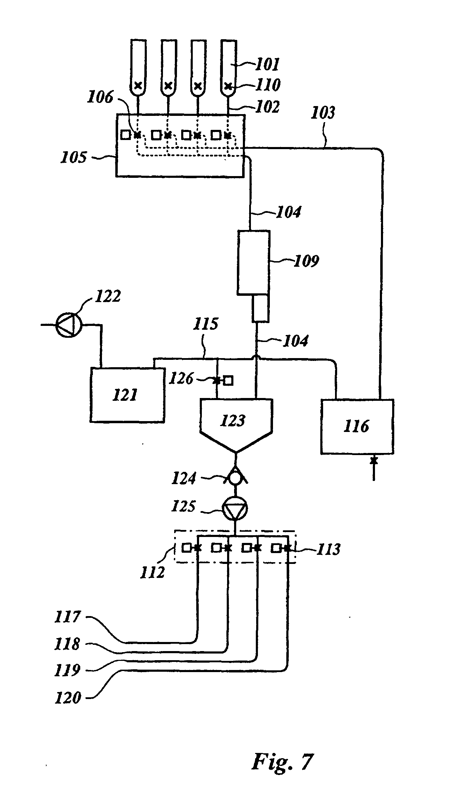

Figure 7 shows another embodiment of the way in which the milk is conveyed to the storage tanks 117-120. Downstream of the milk quantity meter 109, a storage vessel 123 is incorporated in the milking line 104, in which vessel the milk is stored during milking. During milking, the storage vessel 123 is connected to the vacuum vessel 121, with a non-return valve 124 in the line leading to the second valve block 112 being closed. After milking, the connection to the vacuum vessel 121 is closed by means of a shut-off valve 126, and the storage vessel 123 is emptied into one of the storage tanks 117-120 using a pump 125. If appropriate, the pump 125 may be designed in such a way that it can also pump milk when a subatmospheric pressure is prevailing in the storage vessel 123, so that the milk can be pumped into one of the storage tanks 117-120 while milking is still continuing.

The sensor 110 for measuring the properties of the milk is arranged in the milking cup 110 in the embodiment shown in Figure 7. In this way, it is possible to accurately measure properties which differ for each individual quarter of the udder. If appropriate, the sensor 110 may also be positioned in the storage vessel 123.

In the exemplary embodiments shown, those parts of a milking installation which are known to the person skilled in the art, such as a cooling system for cooling milking lines and storage tanks, a cleaning system for cleaning the milk installation, a discharge system for discharging the stored milk and an automatic attachment and/or removal system, such as a milking robot, are not shown in more detail. In addition to the embodiments shown and discussed here, numerous variants in which the principle of the invention can be used are possible.

The discharge of the first jets from a teat into the discharge vessel 116, as incorporated in the exemplary embodiment, for example, is not necessary if milking is carried out by hand or if a separate discharge of this nature is not deemed necessary.

## Claims

1. Device for milking animals, comprising at least one milking stall with means (1, 2, 3) for extracting milk, means (3, 4) for deaerating the milk which has been extracted and means (6) for conveying deaerated milk to a milk tank (11) for storage for a prolonged period, **characterized in that** the storage volume (12) of the milk tank (11) is designed as a closed chamber with a variable volume which corresponds to the volume of the milk stored in the milk tank (11).

2. Device according to Claim 1, **characterized in that** the device comprises cooling means (9, 10) for cooling the milk to approximately the storage temperature while the milk is being conveyed to the milk tank.

3. Device according to Claim 2, **characterized in that** the milk tank is positioned in a cooled environment or is provided with cooled walls.

4. Device according to Claim 1, 2 or 3, **characterized in that** at least part of the walls (31) of the milk tank (11) is made from flexible material.

5. Device according to Claim 4, **characterized in that** the inner sides of the walls (31) of the milk tank (11) are smooth and free of corners.

6. Device according to Claim 5, **characterized in that** the milk tank (11) is rotationally symmetrical.

7. Device according to one of Claims 4-6, **characterized in that** the milk tank (11) is positioned in a receptacle (30) for supporting the flexible walls (31).

8. Device according to Claim 1, 2 or 3, **characterized in that** the walls comprise a movable wall (21) and a fixed wall (15), and sealing means (18) are provided for sealing the opening between the movable wall (21) and the fixed wall (15).

9. Device according to Claim 8, **characterized in that** the sealing means (18) are attached to the movable wall (21) and comprise a rinsing chamber (B) which is open towards the fixed wall (15) and means (16) for circulating rinsing water through the rinsing chamber (B).

10. Device according to Claim 8 or 9, **characterized in that** at least part of the movable wall (21) and the fixed wall (27) is of double-walled design and may be provided with means (19, 20) for circulating cooling liquid.

11. Device according to Claim 8, 9 or 10, **characterized in that** at least part of the walls (15, 21, 27) is made of glass.

12. Device according to one of the preceding claims, **characterized in that** the milk tank (11) is transportable.

13. Device according to one of the preceding claims, **characterized in that** at least one of the walls (27) is provided with an opening for introducing spray means into the closed chamber (12).

14. Device according to one of the preceding claims, **characterized in that** the milk tank (11) is provided with signalling means for signalling that the storage volume (12) has reached its maximum.

15. Device according to Claim 14, **characterized in that** the device comprises a plurality of milk tanks (11) which are all provided with a switchable valve which is coupled to the signalling means.

16. Device according to one of the preceding claims comprising a milking line (104) between the milking cups (101) and a storage tank (117, 118, 119, 120), if appropriate a discharge line (103) between the milking cups (101) and a discharge vessel (116) for the purpose of discharging cleaning liquid or first contaminated milk, and a control system (108), **characterized in that** the device comprises at least two milk tanks (117, 118, 119, 120) which can be connected to the milking line (104) and also switching means (112, 113), which are connected to the control system (108), for connecting the milking line (104) to one of the milk tanks.

17. Device according to Claim 16, **characterized in that** the device comprises identification means (107) for identifying animals which are to be milked and also memory means (108) which determine the expected concentration of a specific substance in and/or property of the milk from an identified animal.

18. Device according to Claim 17, **characterized in that** the expectations concerning the concentration and/or property during the period of lactation and/or during the milking operation are stored in the memory means (108), in addition to means for coupling the milking line (104) to various milk tanks during a milking operation on the basis of the expected concentration and/or property.

19. Device according to Claim 16, 17 or 18, **characterized in that** sensor means (110) for milk are incorporated in the milking line (104), for the purpose of measuring the concentration of a specific substance and/or a specific property in the milk, as well as means for connecting the milking line (104) to various milk tanks during the milking operation on the basis of the measured concentration and/or property.

20. Device according to one of Claims 16-19, **characterized in that** there are plurality of milking stalls (P, Q, R), which each comprise switching means (112, 113) for coupling the milking line (104) to one of the milk tanks (117, 118, 119, 120).

21. Method for milking animals using a device according to one of the preceding claims, **characterized in that** the milk is transported in the milk tank (11) for further processing.

22. Method for milking animals using a device according to one of Claims 1-20, **characterized in that**, after the milk tank (11) has been emptied and, if appropriate, cleaned, the storage volume (12) is connected to a subatmospheric pressure in order to minimize the storage volume.

## Patentansprüche

1. Vorrichtung zum Melken von Tieren, umfassend zumindest eine Melkbox mit Mitteln (1, 2, 3) zum Absaugen von Milch, Mitteln (3, 4) zum Entlüften der Milch, die abgesaugt wurde, und Mittel (6) zum Befördern der entlüfteten Milch zu einem Milchtank (11) zur Lagerung für einen längeren Zeitraum, **dadurch gekennzeichnet, dass** das Lagervolumen (12) des Milchtanks (11) als eine geschlossene Kammer mit einem veränderlichen Volumen ausgeführt ist, das dem Volumen der im Milchtank (11) gelagerten Milch entspricht.

2. Vorrichtung nach Anspruch 1, **dadurch gekennzeichnet, dass** die Vorrichtung Kühlmittel (9, 10) umfasst, um die Milch auf annähernd die Lagertemperatur zu kühlen, während die Milch zum Milchtank befördert wird.

3. Vorrichtung nach Anspruch 2, **dadurch gekennzeichnet, dass** der Milchtank in einer gekühlten Umgebung angeordnet ist oder mit gekühlten Wänden versehen ist.

4. Vorrichtung nach Anspruch 1, 2 oder 3, **dadurch gekennzeichnet, dass** zumindest ein Teil der Wände (31) des Milchtanks (11) aus einem biegsamen Material hergestellt ist.

5. Vorrichtung nach Anspruch 4, **dadurch gekennzeichnet, dass** die inneren Seiten der Wände (31) des Milchtanks (11) glatt und frei von Ecken sind.

6. Vorrichtung nach Anspruch 5, **dadurch gekennzeichnet, dass** der Milchtank (11) rotationssymmetrisch ist.

7. Vorrichtung nach einem der Ansprüche 4 bis 6, **dadurch gekennzeichnet, dass** der Milchtank (11) in einer Fassung (30) zum Stützen der biegsamen Wände (31) angeordnet ist.

8. Vorrichtung nach Anspruch 1, 2 oder 3, **dadurch gekennzeichnet, dass** die Wände eine bewegliche Wand (21) und eine feste Wand (15) umfassen und Dichtungsmittel (18) zum Abdichten der Öffnung zwischen der beweglichen Wand (21) und der festen Wand (15) vorgesehen sind.

9. Vorrichtung nach Anspruch 8, **dadurch gekennzeichnet, dass** die Dichtungsmittel (18) an der beweglichen Wand (21) angebracht sind und eine Spülkammer (B), die zur festen Wand (15) hin offen ist, und Mittel (16) für das Umlaufen von Spülwasser durch die Spülkammer (B) umfassen.

10. Vorrichtung nach Anspruch 8 oder 9, **dadurch gekennzeichnet, dass** zumindest ein Teil der beweglichen Wand (21) und der festen Wand (27) eine doppelwandige Ausführung aufweist und mit Mitteln (19, 20) für das Umlaufen von Kühlflüssigkeit versehen sein kann.

11. Vorrichtung nach Anspruch 8, 9 oder 10, **dadurch gekennzeichnet, dass** zumindest ein Teil der Wände (15, 21, 27) aus Glas hergestellt ist.

12. Vorrichtung nach einem der vorhergehenden Ansprüche, **dadurch gekennzeichnet, dass** der Milchtank (11) transportierbar ist.

13. Vorrichtung nach einem der vorhergehenden Ansprüche, **dadurch gekennzeichnet, dass** zumindest eine der Wände (27) mit einer Öffnung zum Einbringen von Sprühmitteln in die geschlossene Kammer (12) versehen ist.

14. Vorrichtung nach einem der vorhergehenden Ansprüche, **dadurch gekennzeichnet, dass** der Milchtank (11) mit Signalgebemitteln zum Anzeigen, dass das Lagervolumen (12) seinen Höchstwert erreicht hat, versehen ist.

15. Vorrichtung nach Anspruch 14, **dadurch gekennzeichnet, dass** die Vorrichtung eine Vielzahl von Milchtanks (11) umfasst, die alle mit einem umschaltbaren Ventil versehen sind, das mit den Signalgebemitteln gekoppelt ist.

16. Vorrichtung nach einem der vorhergehenden Ansprüche, umfassend eine Melkleitung (104) zwischen den Melkbechern (101) und einem Lagertank (117, 118, 119, 120), falls zweckdienlich, eine Auslassleitung (103) zwischen den Melkbechern (101) und einem Auslassbehälter (116) zum Zweck des Auslassens von Reinigungsflüssigkeit oder erster verunreinigter Milch, und ein Steuersystem (108), **dadurch gekennzeichnet, dass** die Vorrichtung zumindest zwei Milchtanks (117, 118, 119, 120), die mit der Melkleitung (104) verbunden werden können, und auch mit dem Steuersystem (108) verbundene Umschaltmittel (112, 113) zum Verbinden der Melkleitung (104) mit einem der Milchtanks umfasst.

17. Vorrichtung nach Anspruch 16, **dadurch gekennzeichnet, dass** die Vorrichtung Identifizierungsmittel (107) zum Identifizieren von Tieren, die zu melken sind, und auch Speichermittel (108), die die erwartete Konzentration eines bestimmten Stoffs in und/oder die Eigenschaft der Milch von einem identifizierten Tier bestimmen, umfasst.

18. Vorrichtung nach Anspruch 17, **dadurch gekennzeichnet, dass** die Erwartungen hinsichtlich der Konzentration und/oder der Eigenschaft während des Zeitraums der Milchabsonderung und/oder während des Melkvorgangs in den Speichermitteln (108) gespeichert werden, zusätzlich zu Mitteln zum Koppeln der Melkleitung (104) während eines Melkvorgangs auf der Basis der erwarteten Konzentration und/oder Eigenschaft mit verschiedenen Milchtanks.

19. Vorrichtung nach Anspruch 16, 17 oder 18, **dadurch gekennzeichnet, dass** Sensormittel (110) für Milch in der Melkleitung (104) aufgenommen sind, um die Konzentration eines bestimmten Stoffs und/oder einer bestimmten Eigenschaft in der Milch zu messen, wie auch Mittel zum Verbinden der Melkleitung (104) während des Melkvorgangs auf der Basis der gemessenen Konzentration und/oder Eigenschaft mit verschiedenen Milchtanks.

20. Vorrichtung nach einem der Ansprüche 16 bis 19, **dadurch gekennzeichnet, dass** eine Vielzahl von Melkboxen (P, Q, R) vorhanden ist, die jeweils Umschaltmittel (112, 113) zum Koppeln der Melkleitung (104) mit einem der Milchtanks (117, 118, 119, 120) umfassen.

21. Verfahren zum Melken von Tieren unter Verwendung einer Vorrichtung nach einem der vorhergehenden Ansprüche, **dadurch gekennzeichnet, dass** die Milch zur weiteren Verarbeitung im Milchtank (11) transportiert wird.

22. Verfahren zum Melken von Tieren unter Verwendung einer Vorrichtung nach einem der Ansprüche 1 bis 20, **dadurch gekennzeichnet, dass** das Speichervolumen (12), nachdem der Milchtank (11) geleert und, falls zweckdienlich, gereinigt wurde, mit einem Druck unterhalb des Luftdrucks verbunden wird, um das Lagervolumen auf das Mindestmaß zurückzuführen.

## Revendications

1. Dispositif pour traire des animaux, comprenant au moins une stalle de traite avec des moyens (1,2,3) pour extraire du lait, des moyens (3,4) pour désaérer le lait qui a été extrait, et des moyens (6) pour acheminer le lait désaéré vers un réservoir de lait (11) en vue d'un stockage prolongé, **caractérisé en ce que** le volume de stockage (12) du réservoir de lait (11) est conçu sous la forme d'une chambre fermée de volume variable correspondant au volume du lait stocké dans le réservoir à lait (11).

2. Dispositif selon la revendication 1, **caractérisé en ce que** le dispositif comprend des moyens de refroidissement (9,10) pour refroidir le lait approximativement à la température de stockage pendant l'acheminement du lait vers le réservoir de stockage.

3. Dispositif selon revendication 2, **caractérisé en ce que** le réservoir de lait est situé dans un environnement refroidi ou est doté de parois refroidies.

4. Dispositif selon la revendication 1, 2 ou 3, **caractérisé en ce qu'**une partie au moins des parois (31) du réservoir de lait (11) est fabriquée dans un matériau flexible.

5. Dispositif selon la revendication 4, **caractérisé en ce que** les faces internes des parois (31) du réservoir de lait (11) sont lisses et exemptes de coins.

6. Dispositif selon la revendication 5, **caractérisé en ce que** le réservoir de lait (11) possède une symétrie de rotation.

7. Dispositif selon l'une des revendications 4 à 6, **caractérisé en ce que** le réservoir de lait (11) est positionné dans un réceptacle (30) destiné à soutenir les parois flexibles (31).

8. Dispositif selon la revendication 1, 2 ou 3, **caractérisé en ce que** les parois comprennent une paroi mobile (21) et une paroi fixe (15), et des moyens d'étanchéité (18) sont prévus pour étancher l'ouverture entre la paroi mobile (21) et la paroi fixe (15).

9. Dispositif selon la revendication 8, **caractérisé en ce que** les moyens d'étanchéité (18) sont fixés à la paroi mobile (21) et comprennent une chambre de rinçage (B) qui est ouverte vers la paroi fixe (15) et des moyens (16) pour faire circuler de l'eau de rinçage à travers la chambre de rinçage (B).

10. Dispositif selon la revendication 8 ou 9, **caractérisé en ce qu'**une partie au moins de la paroi mobile (2) et de la paroi fixe (27) est de conception à double paroi et peut être dotée de moyens (19, 20) pour assurer la circulation de liquide de refroidissement.

11. Dispositif selon la revendication 8, 9 ou 10, **caractérisé en ce qu'**une partie au moins des parois (15, 21,27) est réalisée en verre.

12. Dispositif selon l'une des revendications précédentes, **caractérisé en ce que** le réservoir de lait (11) est transportable.

13. Dispositif selon l'une des revendications précédentes, **caractérisé en ce qu'**une des parois (27) au moins est pourvue d'une ouverture pour l'introduction de moyens de pulvérisation dans la chambre fermée (12).

14. Dispositif selon l'une des revendications précédentes, **caractérisé en ce que** le réservoir de lait (11) est pourvu de moyens de signalisation pour donner un signal indiquant que le volume de stockage (12) a atteint son maximum.

15. Dispositif selon la revendication 14, **caractérisé en ce que** le dispositif comprend une pluralité de réservoirs de lait (11) qui sont tous pourvus d'une vanne à commutateur accouplée aux moyens de signalisation.

16. Dispositif selon l'une des revendications précédentes, comprenant un tuyau à lait (104) entre les gobelets trayeurs (101) et un réservoir de stockage (117, 118, 119, 120), le cas échéant un tuyau d'écoulement (103) entre les gobelets trayeurs (101) et un récipient de vidange (116) dans le but d'évacuer du liquide de nettoyage ou du premier lait contaminé, et un système de commande (108), **caractérisé en ce que** le dispositif comprend au moins deux réservoirs de lait (117, 118, 119, 120) qui peuvent être reliés au tuyau à lait (104) et également des moyens de commutation (112, 113), qui sont connectés au système de commande (108), en vue de relier le tuyau à lait (104) à l'un des réservoirs de lait.

17. Dispositif selon la revendication 16, caractérisé entre ce que le dispositif comprend des moyens d'identification (107) pour identifier les animaux devant être traits et également des moyens de mémorisation (108) déterminant la concentration attendue d'une substance spécifique dans le lait et/ou une propriété attendue du lait d'un animal identifié.

18. Dispositif selon la revendication 17, **caractérisé en ce que** les attentes concernant la concentration et/ou la propriété au cours de la période de lactation et au/cours de l'opération de traite sont stockées dans les moyens de mémorisation (108), outre des moyens de raccordement du tuyau à lait (104) aux divers réservoirs lors d'une opération de traite sur la base de la concentration et/ou de la propriété attendue.

19. Dispositif selon la revendication 16, 17 ou 18, **caractérisé en ce que** des moyens formant capteur (110) pour le lait sont incorporés au tuyau à lait (104) dans le but de mesurer la concentration d'une substance spécifique et/ou une propriété spécifique du lait, ainsi que des moyens pour le raccordement du tuyau à lait (104) aux divers réservoirs de lait pendant l'opération de traite sur la base de la concentration/et ou de la propriété.

20. Dispositif selon l'une des revendications 16 à 19, **caractérisé en ce qu'**il existe une pluralité de stalles de traite (P, Q, R) comprenant chacune des moyens de commutation (112, 113) pour le raccordement du tuyau à lait (104) à l'un des réservoirs de lait (117, 118, 119, 120).

21. Procédé pour traire des animaux utilisant un dispositif selon l'une des revendications précédentes, **caractérisé en ce que** le lait est transporté dans le réservoir de lait (11) en vue d'un traitement ultérieur.

22. Procédé pour traire des animaux utilisant un dispositif selon l'une des revendications 1 à 20, **caractérisé en ce que**, lorsque le réservoir de lait (11) a été vidé, et, le cas échéant, nettoyé, le volume de stockage (12) est porté à une pression subatmosphérique afin de minimiser le volume de stockage.
